# EUROPEAN PATENT APPLICATION

(11) **EP 2 719 923 A1**
(43) Date of publication of application: **16.04.2014**
(21) Application number: 11867141.1
(22) Date of filing: 10.06.2011
(51) Int. Cl.: F16H 15/52

(54) **CONTINUOUSLY VARIABLE TRANSMISSION**

(71) Applicant: TOYOTA JIDOSHA KABUSHIKI KAISHA, Toyota-shi, Aichi-ken, 471-8571 (JP)
(72) Inventor: OGAWA, Hiroyuki, Toyota-shi, Aichi-ken, 471-8571 (JP); TOMOMATSU, Daisuke, Toyota-shi, Aichi-ken, 471-8571 (JP); MURAKAMI, Akira, Toyota-shi, Aichi-ken, 471-8571 (JP); SHIINA, Takahiro, Toyota-shi, Aichi-ken, 471-8571 (JP); ARATSU, Yuki, Toyota-shi, Aichi-ken, 471-8571 (JP)
(74) Representative: Intès, Didier Gérard André
(86) International application number: PCT/JP2011/063346
(87) International publication number: WO 2012/169056

(57) **Abstract**

A continuously variable transmission includes a plurality of planetary balls (40) interposed between a first and second rotating members (10, 20) on a shaft (50), an iris plate (80) and a worm gear (81) that tilt the planetary balls (40), a sun roller (30) that includes a first sun roller (31) that includes a first tubular section (31a) having first contact points (P1) with the planetary balls (40) and a second tubular section (31b) having a smaller outer diameter than the first tubular section (31a) and is capable of relative rotation with respect to the shaft (50) and a second sun roller (32) that includes second contact points (P2) with the planetary balls (40) and is capable of relative rotation with respect to the first sun roller (31) on an outer peripheral surface of the second tubular section (31b), and thrust bearings (TB) that are arranged between the first sun roller (31) and the second sun roller (32) and bear thrust loads transmitted from the planetary balls (40) to the first sun roller (31) and the second sun roller (32).

## Description

### TECHNICAL FIELD

The present invention relates to a continuously variable transmission that includes a plurality of rotating elements having a common rotational shaft and a plurality of rolling members radially arranged with respect to the rotational shaft and continuously variably changes gear ratios between input and output by tilting the rolling members interposed between two of the rotating elements.

### BACKGROUND ART

A so-called traction planetary gear mechanism has been known as a conventional continuously variable transmission of this type. The traction planetary gear mechanism includes a transmission shaft as a rotational center, a plurality of rotating elements that are capable of relative rotation around a central axis of the transmission shaft as a first rotational central axis, a plurality of rolling members that are radially arranged around the first rotational central axis and have a second rotational central axis that is separate from and in parallel with the first rotational central axis, support shafts that make the rolling elements rotate and support the rolling elements, and a fixed element that is fixed to the transmission shaft and holds the rolling members via protrusions of the rolling members on the support shafts. In the traction planetary gear mechanism, the rolling elements are interposed between a first rotating element and a second rotating element that are arranged to face each other, the rolling members are arranged on an outer peripheral surface of a third rotating element, and the rolling members are tilted, thereby continuously variably changing gear ratios.

For example, Patent Documents 1 to 4 below disclose such a type of continuously variable transmission. A continuously variable transmission in Patent Document 1 is configured such that a central section of an outer peripheral surface of a sun roller as the third rotating element is formed in a recessed shape that is radially recessed inward and the sun roller comes into contact with each planetary ball (rolling member) at two points. The continuously variable transmission is configured such that the sun roller is split into two parts in an axial direction so that each of the contact points is capable of relative rotation around a first rotational central axis and each of the split structures is supported by a carrier as a fixed element via angular bearings. Patent Document 1 discloses the transmission in which an inner ring of each of the angular bearings is fitted in the carrier and a snap ring is further arranged in an end section of the inner ring in the axial direction to restrict relative movement from each of the split structure in the axial direction. Further, a continuously variable transmission in Patent Document 2 is configured such that the sun roller is mounted on the transmission shaft via the angular bearings and lubricating oil is supplied to the angular bearings via an axial oil passage in the transmission shaft. A continuously variable transmission in Patent Document 3 is configured such that discs as the first rotating element and the second rotating element serve as an input disc and an output disc of torque and the input disc and the output disc are disposed on a transmission shaft side, in other words, on a radial inside of the rolling members. In the continuously variable transmission, one of the discs is mounted on the transmission shaft via radial bearings. Further, a continuously variable transmission in Patent Document 4 has an engine and a motor that are mechanically connected together and controls the gear ratio to restrict a rotational speed of the motor.

### PRIOR TECHNICAL DOCUMENTS

### PATENT DOCUMENTS

Patent Document 1: US 2010/0267510 A
Patent Document 2: US 2010/0093480 A
Patent Document 3: Japanese Patent Application Publication No. 55-135259 (JP 55-135259 A)
PATENT DOCUMENT 4: US 2010/0140000

### SUMMARY OF THE INVENTION

### PROBLEM TO BE SOLVED BY THE INVENTION

Incidentally, in a case where the sun roller is formed in a cylinder having a constant outer diameter, the sun roller contacts the planetary balls at single points, thus increasing normal force. Here, in this type of continuously variable transmission, a friction loss increases as the normal force increases, and this may result in damage to outer peripheral surfaces of the sun roller and the planetary balls. Therefore, it is desired that the normal force be reduced. To achieve reduction in the normal force, contact points between the planetary balls and the sun roller are increased. Accordingly, the outer peripheral surface of the sun roller is radially recessed inward, and the planetary ball is arranged in the recessed section to form two-point contact. However, when focusing on the circumferential speeds at the two contact points with respect to the transmission shaft, each of the contact points on the sun roller side rotates at the same circumferential speed. In contrast, the planetary ball is subject to a circumferential speed difference between the contact points according to the tilt. Therefore, the continuously variable transmission can reduce the normal force at each of the contact points by bringing the planetary ball into two-point contact with the sun roller; however, spin occurs between the planetary ball and the sun roller. The continuously variable transmission in above Patent Document 1 hinders occurrence of the spin, has the sun roller formed in a split structure, and are thereby intended to absorb the spin.

However, this type of conventional continuously variable transmission described above is eventually subject to a large circumferential speed difference between outer rings and the inner rings of the bearings (thrust bearings or angular bearings) provided between the sun roller and the transmission shaft regardless of the tilt angle of the planetary balls and thus subject to a large loss due to the product of the circumferential speed difference and the thrust force. In other words, in the conventional continuously variable transmission, the circumferential speed difference occurs between the inner rings and the outer rings of the bearings supporting the rotating element along with the rotation of the rotating element (such as the sun roller in above Patent Document 1 and the disc in above Patent Document 3) interposed between the transmission shaft and the rolling members (the circumferential speed of the inner rings is substantially zero). Because the circumferential speed difference occurs regardless of the tilt angle of the rolling members, the conventional continuously variable transmission has a large loss of energy in the bearing regardless of the gear ratio (the tilt angle of the planetary balls) and has impaired power transmission efficiency.

Accordingly, an object of the present invention is to provide a continuously variable transmission that solves such problems of the conventional transmission and can restrict a decrease of power transmission efficiency.

### MEANS FOR SOLVING THE PROBLEM

To achieve the object, the present invention is a continuously variable transmission including: a transmission shaft which serves as a rotational center; first and second rotating elements that are arranged to face each other on the transmission shaft, have a common first rotational central axis, and are capable of relative rotation; a plurality of rolling members that have a second rotational central axis in parallel with the first rotational central axis, radially arranged around the first rotational central axis, and are interposed between the first and second rotating elements; support shafts that have the second rotational central axis and have both ends protruding from the rolling members; a holding member which holds the rolling members so as to allow tilt via the respective protrusions of the support shafts; a third rotating element which includes a first rotating member that includes a first tubular section having first contact points with the rolling members on an outer peripheral surface and a second tubular section having a smaller outer diameter than the first tubular section and is capable of concentric relative rotation with respect to the transmission shaft and a second rotating member that has second contact points with the rolling members on an outer peripheral surface and is capable of concentric relative rotation with respect to the first rotating member on an outer peripheral surface of the second tubular section; bearings that are interposed between the first rotating member and the second rotating member and bear thrust loads in an axial direction that are transmitted from the rolling members via the first and second contact points to the first rotating member and the second rotating member; and a transmission device which changes gear ratios by changing rotational ratios between the first rotating element and the second rotating element by tilt actions of the rolling members.

Here, the third rotating element is preferably a sun roller in a two-part split structure having the first rotating member and the second rotating member.

Further, The continuously variable transmission includes: first and second bearings that are arranged at intervals in the axial direction between the first rotating member and the transmission shaft; and third bearings that are arranged between the outer peripheral surface of the second tubular section and an inner peripheral surface of the second rotating member. An axial oil passage to which lubricating oil is supplied and discharge passages that allow communication between the axial oil passage and spaces between the first and the second bearings are preferably provided in the transmission shaft, and the first rotating member is preferably provided with oil passages that allow communication between the spaces and the first and second contact points sides.

Further, a first guide section which guides the lubricating oil discharged from the oil passage of the first rotating member toward the first contact point and a second guide section that guides the discharged lubricating oil toward the second contact point are preferably provided in an end section of the second rotating member which is positioned between the first contact point and the second contact point.

### EFFECT OF THE INVENTION

Because the loads from the rolling members are spread to the first rotating member and the second rotating member, the continuously variable transmission in accordance with the present invention can restrict a decrease in power transmission efficiency by reduction in a friction loss among the rotating members and the rolling members and can reduce damage thereto. Further, the continuously variable transmission allows relative rotation between the first rotating member and the second rotating member and can thus reduce a spin loss among the rotating members and the rolling members and thus realize restriction of the decrease in power transmission efficiency and an improvement in durability. Still further, in the continuously variable transmission, the bearings that bear the thrust loads in the axial direction that are transmitted from the rolling members to the first rotating member and the second rotating member are interposed between the first rotating member and the second rotating member, thus allowing restriction of the decrease in power transmission efficiency. Moreover, in the continuously variable transmission, the bearings are arranged between the first rotating member and the second rotating member, the circumferential speed difference between races of the bearings can thereby be reduced. Accordingly, a loss of energy in the bearings can be reduced, thus allowing restriction of the decrease in power transmission efficiency and the improvement in durability.

### BRIEF DESCRIPTION OF THE DRAWINGS

[FIG. 1] FIG. 1 is a partial cross-sectional view of a configuration of a first embodiment of a continuously variable transmission in accordance with the present invention.
[FIG. 2] FIG. 2 illustrates guide sections of support shafts in a carrier.
[FIG. 3] FIG. 3 illustrates the guide sections of the support shafts in the carrier;
[FIG. 4] FIG. 4 illustrates an iris plate.
[FIG. 5] FIG. 5 specifically illustrates main parts of the continuously variable transmission of the first embodiment.
[FIG. 6] FIG. 6 specifically illustrates main parts of a modification of the continuously variable transmission of the first embodiment.
[FIG. 7] FIG. 7 specifically illustrates main parts of a continuously variable transmission of a second embodiment.
[FIG. 8] FIG. 8 specifically illustrates main parts of a modification of the continuously variable transmission of the second embodiment and illustrates a guide section for lubricating oil to a first contact point.
[FIG. 9] FIG. 9 specifically illustrates main parts of a modification of the continuously variable transmission of the second embodiment and illustrates a guide section for lubricating oil to a second contact point.
[FIG. 10] FIG. 10 illustrates guide sections for lubricating oil.
[FIG. 11] FIG. 11 is a cross-sectional view taken along line X-X of FIG. 10, which specifically illustrates the guide section for lubricating oil to the first contact point.
[FIG. 12] FIG. 12 is a cross-sectional view taken along line Y-Y of FIG. 10, which specifically illustrates the guide section for lubricating oil to the second contact point.

### MODES FOR CARRYING OUT THE INVENTION

Embodiments of a continuously variable transmission in accordance with the present invention will be described hereinafter in detail with reference to drawings. It should be noted that the present invention is not limited by the embodiments.

### [First Embodiment]

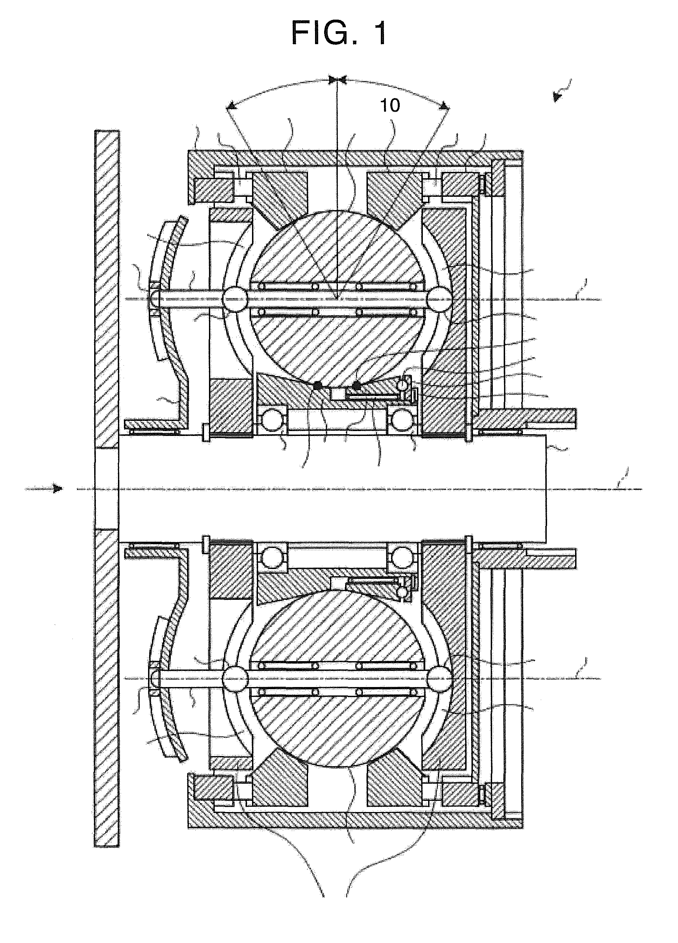

A first embodiment of the continuously variable transmission in accordance with the present invention will be described hereinafter with reference to FIGs. 1 to 6.

First, an example of the continuously variable transmission of this embodiment will be described with reference to FIG. 1. A reference numeral 1 in FIG. 1 denotes the continuously variable transmission of this embodiment.

A continuously variable transmission mechanism constituting a primary part of the continuously variable transmission 1 is a so-called traction planetary gear mechanism, which includes first to third rotating elements 10, 20, 30 that have a common first rotational central axis R1 and are capable of relative rotation among each other, a plurality of rolling members 40 that are radially arranged around the first rotational central axis R1 and each have a separate second rotational central axis R2 in parallel with the first rotational central axis R1 in reference positions described below, a shaft 50 as a transmission shaft that is arranged at a rotational center of the first to third rotating elements 10, 20, 30, and a holding member 60 that holds the rolling members 40 so as to allow tilt. The continuously variable transmission 1 changes gear ratios γ between input and output by inclining the second rotational central axis R2 with respect to the first rotational central axis R1 and tilting the rolling members 40. Hereinafter, a direction along the first rotational central axis R1 and the second rotational central axis R2 is referred to as the axial direction, and a direction around the first rotational central axis R1 is referred to as the circumferential direction unless particularly mentioned otherwise. Further, a direction orthogonal to the first rotational central axis R1 is referred to as the radial direction. Along the radial direction, a direction toward the inside is referred to as radially inward, and a direction toward the outside is referred to as radially outward.

In the continuously variable transmission 1, the rolling members 40 are interposed between the first rolling element 10 and the second rolling element 20 that are arranged to face each other, and the rolling members 40 are arranged on outer peripheral surfaces of the third rotating element 30. Torque is transmitted via the rolling members 40 among the first rotating element 10, the second rotating element 20, and the third rotating element 30. For example, in the continuously variable transmission 1, one of the first to third rotating elements 10, 20, 30 can serve as an input section of torque (power), and at least one of the remaining rotating elements can serve as an output section of torque. Accordingly, in this continuously variable transmission 1, the ratio of the rotational speed (the number of rotations) between any one of the rotating elements that serves as the input section and any one of the rotating elements that serves as the output section becomes the gear ratio γ. For example, the continuously variable transmission 1 is arranged on a power transmission path of a vehicle. In the arrangement, the input section is coupled to a power source side such as an engine or a motor, and the output section is coupled to a drive wheel side. In the continuously variable transmission 1, a rotational operation of each of the rotating elements in a case where torque is input to the rotating element serving as the input section is referred to as forward drive, and a rotational operation of each of the rotating elements in a case where torque in the opposite direction to the forward drive is input to the rotating element serving as the output section is referred to as opposite drive. For example, according to the above example of the vehicle, the continuously variable transmission 1 has the forward drive when torque is input from the power source side to the rotating element as the input section and the rotating element is rotated as in acceleration and has the opposite drive when torque in the opposite direction to the forward drive is input from the drive wheel side to the rotating element as the output section as in deceleration.

The continuously variable transmission 1 pushes at least one of the first and second rotating elements 10, 20 to the rolling members 40, thereby generates appropriate tangential force (traction force) among the first to third rotating elements 10, 20, 30 and the rolling member 40, and enables transmission of torque among those. Further, the continuously variable transmission 1 tilts the rolling members 40 in a tilt plane that contains their own second rotational central axis R2 and the first rotational central axis R1, changes the ratio of the rotational speed (the number of rotations) between the first rotating element 10 and the second rotating element 20, and thereby changes the ratios of the rotational speed (the number of rotations) between input and output.

Here, in the continuously variable transmission 1, the first and the second rotating elements 10, 20 provide a function of a ring gear in a planetary gear mechanism. Further, the third rotating element 30 functions as a sun roller of the traction planetary gear mechanism. Moreover, the rolling member 40 functions as a ball type pinion in the traction planetary gear mechanism, and the holding member 60 functions as a carrier. Hereinafter, the first and the second rotating elements 10, 20 will be referred to as "first and second rotating members 10, 20", respectively. Further, the third rotating element 30 will be referred to as "sun roller 30", and the rolling member 40 will be referred to as "planetary ball 40". Moreover, the holding member 60 will be referred to as "carrier 60". In examples described below, the carrier 60 is a fixed element, which is fixed to the shaft 50.

The shaft 50 is a columnar or cylindrical fixed shaft which is fixed to a fixed section of the continuously variable transmission 1 in a housing, a vehicle body, or the like (none shown) and is configured not to relatively rotate with respect to the fixed section.

The first and second rotating members 10, 20 are disc members or ring members whose central axes match with the first rotational central axis R1 and are disposed to face each other in the axial direction and interpose the planetary balls 40 therebetween. In this example, both of them are the disc members.

The first and second rotating members 10, 20 have contact surfaces that contact a outer peripheral curved surface on the radial outside of the planetary balls 40 that will be specifically described below. The contact surfaces are formed in concave circular arc surfaces having equivalent curvature to the outer peripheral curved surface of the planetary ball 40, concave circular arc surfaces having different curvature from the outer peripheral curved surface, convex circular arc surfaces, planes, and the like. Here, the contact surfaces are formed such that the distances between the first rotational central axis R1 and contact points with the planetary balls 40 are the same length in reference positions described below. Contact angles θ of the first and second rotating members 10, 20 with respect to the planetary balls 40 are the same angle. The contact angle θ is an angle from the reference to the contact point with the planetary ball 40. Here, the radial direction is the reference. The contact surfaces make point contact or surface contact with the outer peripheral curved surface of the planetary ball 40. The contact surfaces are formed such that force in a radially inward and oblique direction (normal direction) is applied to the planetary ball 40 when force in the axial direction (pressing force) is applied from the first and second rotating members 10, 20 to the planetary ball 40.

In this example, the first rotating member 10 acts as a torque input section in the forward drive of the continuously variable transmission 1, and the second rotating member 20 acts as a torque output section in the forward drive of the continuously variable transmission1. Thus, an input shaft (first rotational shaft) 11 is coupled to the first rotating member 10, and an output shaft (second rotational shaft) 21 is coupled to the second rotating member 20. The input shaft 11 and the output shaft 21 are capable of relative rotation in the circumferential direction with respect to the shaft 50. The continuously variable transmission 1 may use the shaft provided as the input shaft 11 as the output shaft and may use the shaft provided as the output shaft 21 as the input shaft.

Here, an axial force generation section 71 is provided between the input shaft 11 and the first rotating member 10. Here, a torque cam is used as the axial force generation section 71. Accordingly, a locking member on the input shaft 11 side locks in a locking member on the first rotating member 10 side, and the axial force generation section 71 generates axial force and transmits rotational torque between the input shaft 11 and the first rotating member 10, thereby making them integrally rotate. Further, an axial force generation section 72 similar to the axial force generation section 71 is disposed between the output shaft 21 and the second rotating member 20. Axial force generated by the axial force generation sections 71, 72 is transmitted to the first rotating member 10 and the second rotating member 20 and then serves as pressing force to press the planetary ball 40.

The sun roller 30 is concentrically arranged with the shaft 50 and relatively rotates in the circumferential direction with respect to the shaft 50. The plurality of planetary balls 40 are radially arranged at generally regular intervals on an outer peripheral surface of the sun roller 30. Accordingly, the outer peripheral surface of the sun roller 30 serves as a rolling contact surface during rotation of the planetary balls 40. The sun roller 30 by its own rotation can make the planetary balls 40 roll (rotate) and can rotate along with rolling actions (rotating actions) of the planetary balls 40. The sun roller 30 will be described in detail below.

The planetary ball 40 is the rolling member that rotates on the outer peripheral surface of the sun roller 30. Although the planetary ball 40 is preferably a perfect spheroid, it may be a member behaving like a sphere in a rolling direction such as a rugby ball that has an elliptical cross section. The planetary ball 40 is rotatably supported by a support shaft 41 that passes through the center thereof. For example, the planetary ball 40 is capable of relative rotation with respect to the support shaft 41 around the second rotational central axis R2 as a rotational axis (that is, rotation) by a bearing disposed between the support shaft 41 and the outer peripheral surface. Accordingly, the planetary ball 40 can roll on the outer peripheral surface of the sun roller 30 with the support shaft 41 being the center. Both ends of the support shaft 41 protrude from the planetary ball 40.

As shown in FIG. 1, a reference position for the support shaft 41 is a position where the second rotational central axis R2 is in parallel with the first rotational central axis R1. The support shaft 41 can swing (tilt) together with the planetary ball 40 between the reference position and a tilted position in a tilt plane that contains the own rotational central axis (the second rotational central axis R2) of the support shaft 41 formed in the reference position and the first rotational central axis R1. The tilt is made in the tilt plane with the center of planetary ball 40 being a fulcrum.

The carrier 60 holds the protrusions of the support shaft 41 so as not to hinder the tilt action of the planetary ball 40. The carrier 60 has first and second disc sections 61, 62 whose central axes match with the first rotational central axis R1, for example. The first and second disc sections 61, 62 face each other and are disposed at an interval so that the sun roller 30 and the planetary ball 40 can be interposed between the disc sections 61, 62. Inner peripheral surface sides of the first and second disc section 61, 62 are fixed to an outer peripheral surface side of the shaft 50, thereby preventing the carrier 60 from making relative rotation in the circumferential direction and relative movement in the axial direction with respect to the shaft 50. For example, the inner peripheral surfaces of the first and second disc section 61, 62 are spline-fitted on the outer peripheral surface of the shaft 50, and the carrier 60 can thereby be prevented from such relative rotation in the circumferential direction. Further, to prevent the relative movement in the axial direction, locking members such as snap rings can be disposed on side surfaces of the first and second disc sections 61, 62 in the axial direction. Alternatively, the carrier 60 can be press-fitted on the shaft 50 to restrict the relative rotation and the relative movement. The first and second disc sections 61, 62 of the carrier 60 can be coupled together by a plurality of coupling shafts.

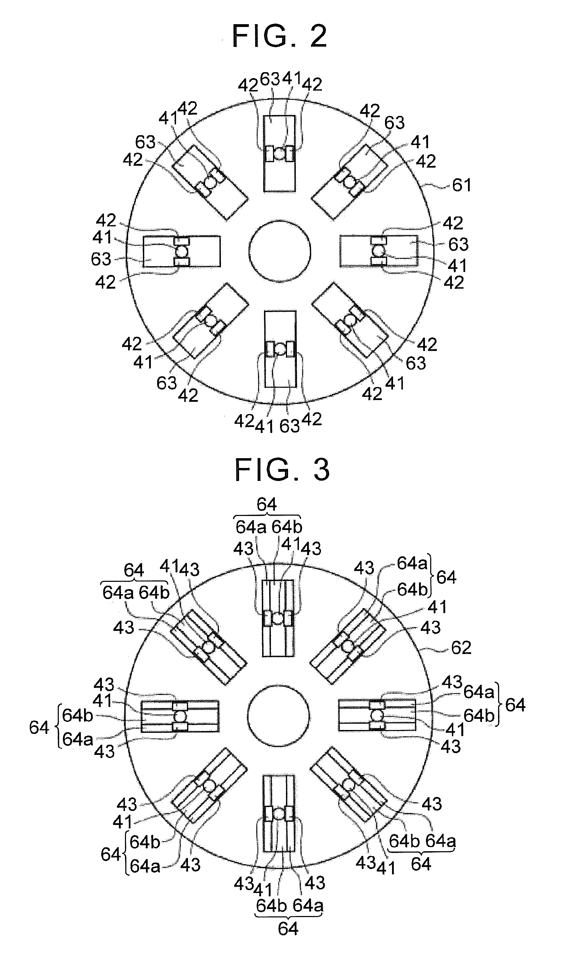

The continuously variable transmission 1 is provided with guide sections 63, 64 for guiding the support shaft 41 in the tilt direction during the tilt of the planetary ball 40. In this example, the guide sections 63, 64 are provided in the carrier 60. The guide sections 63, 64 are radial guide grooves or guide holes that guide the support shaft 41 protruding from the planetary ball 40 in the tilt direction and are formed in sections of the first and second disc sections 61, 62 that face each other for each of the planetary ball 40 (FIGs. 2 and 3). That is, all the guide sections 63, 64 are radially arranged when seen in the axial direction (the direction of arrow A in FIG. 1, for example).

The guide section 63 is a guide groove whose groove width is provided in the circumferential direction of the first disc section 61 and whose groove bottom is provided in the axial direction. Here, the guide section 63 side of the support shaft 41 is interposed between two roller guides 42, 42. Accordingly, the guide section 63 is formed to have a groove width that corresponds not only to the diameter of the support shaft 41 but to a width containing the dimensions of the two roller guides 42, 42. The roller guide 42 includes a rotational axis orthogonal to the second rotational central axis R2 and rolls on the groove bottom of the guide section 63 along with the tilt of the planetary ball 40.

Meanwhile, the guide section 64 is formed in a composite shape of a guide groove 64a and a guide hole 64b. A roller guide 43 that is the same as the roller guide 42 rolls on a groove bottom of the guide groove 64a during the tilt. The guide groove 64a is formed to have a groove width in consideration of the two roller guides 43, 43 between which the support shaft 41 is interposed in the same way as the guide section 63. The guide hole 64b is formed by drilling a central section of a groove bottom of the guide groove 64a in the groove width direction, and the support shaft 41 is inserted in the guide hole 64b. In other words, the guide section 64 is the guide section 63 provided with the guide hole 64b.

In the continuously variable transmission 1, when the tilt angle of the planetary ball 40 is in the referential position, that is, at zero degree, the first rotating member 10 and the second rotating member 20 rotate at the same rotational speed (the same number of rotations). That is, in such a case, the rotation ratio (the ratio of the rotational speeds or the numbers of rotations) between the first rotating member 10 and the second rotating member 20 becomes one, and the gear ratio γ is one. On the other hand, when the planetary ball 40 is tilted from the reference position, the distance between the central axis (the second rotational central axis R2) of the support shaft 41 and the contact point with the first rotating member 10 changes, and the distance between the central axis of the support shaft 41 and the contact point with the second rotating member 20 changes. Accordingly, either one of the first rotating member 10 and the second rotating member 20 rotates faster than in the reference position, and the other rotates slower. For example, the second rotating member 20 rotates slower (speed reduction) than the first rotating member 10 when the planetary ball 40 is tilted to one side and rotates faster (speed increase) than the first rotating member 10 when the planetary ball 40 is tilted to the other side. Thus, the continuously variable transmission 1 can continuously variably change the rotation ratios (gear ratios γ) between the first rotating member 10 and the second rotating member 20 by changing the tilt angle. During the speed increase (γ < 1) in this case, the upper planetary ball 40 in FIG. 1 is tilted counterclockwise on the page, and the lower planetary ball 40 is tilted clockwise on the page. Further, during the speed reduction (γ > 1) in this case, the upper planetary ball 40 in FIG. 1 is tilted clockwise on the page, and the lower planetary ball 40 is tilted counterclockwise on the page.

The continuously variable transmission 1 is provided with a transmission device for changing the gear ratios γ. Because the gear ratio γ changes according to the change in the tilt angles of the planetary balls 40, a tilting device that tilts the planetary balls 40 is used as the transmission device. Here, the transmission device includes a disc-shaped iris plate (tilting element) 80.

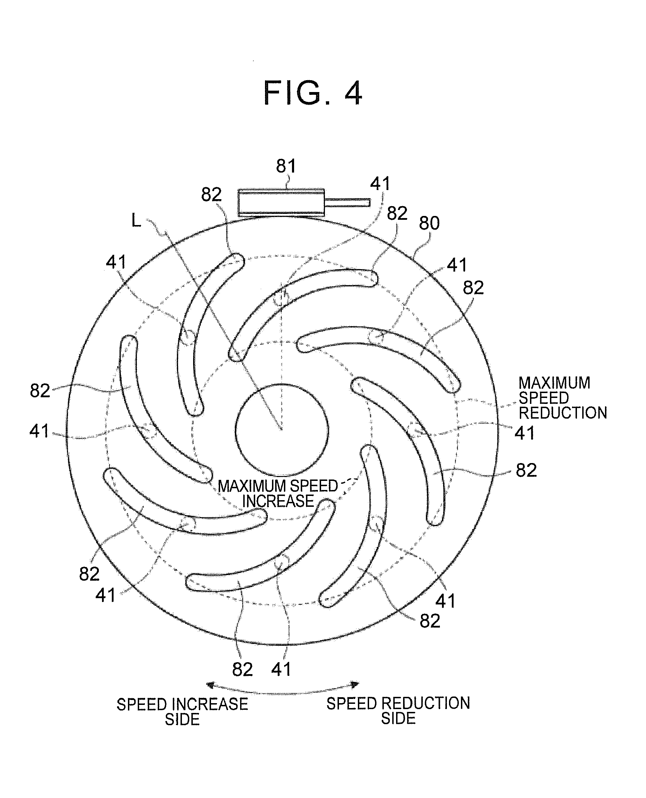

The iris plate 80 is mounted on the shaft 50 via bearings on a radial inside and is capable of relative rotation with respect to the shaft 50 around the first rotational central axis R1. An actuator (driving section) such as a motor (not shown) is used for the relative rotation. Driving force of the driving section is transmitted to an outer peripheral section of the iris plate 80 via the worm gear 81 shown in FIG. 4.

The iris plate 80 is arranged on the input sides of the planetary balls 40 (the contact section sides with the first rotating members 10) or the output sides (the contact section sides with the second rotating members 20) and on the outside of the carrier 60. In this example, the iris plate 80 is arranged on the output sides. Restriction holes (iris holes) 82 in which one of the protrusions of the support shafts 41 are inserted are formed in the iris plate 80. Assuming that a reference line L in the radial direction whose origin is a radial inside end is drawn, the restriction hole 82 is formed in an arc shape that separates from the reference line L in the circumferential direction from the radial inside toward the radial outside (FIG. 4). FIG. 4 is a view that is seen in the direction of arrow A in FIG. 1.

The iris plate 80 rotates clockwise on the page of FIG. 4, and one of the protrusions of the support shaft 41 thereby moves toward the center side of the iris plate 80 along the restriction hole 82. In this case, because the protrusions of the support shaft 41 are inserted in the guide grooves 63, 64 of the carrier 60, the one of the protrusions that is inserted in the restriction hole 82 radially moves inward. Further, the iris plate 80 rotates counterclockwise on the page of FIG. 4, and the one of the protrusions of the support shaft 41 thereby moves toward the outer peripheral side of the iris plate 80 along the restriction hole 82. In this case, the one of the protrusions radially moves outward because of functions of the guide grooves 63, 64. As described above, the support shaft 41 can move in the radial direction by the guide grooves 63, 64 and the restriction hole 82. This enables the above-described tilt action of the planetary ball 40.

Incidentally, if the above-described sun roller 30 is concentric with the shaft 50 and is formed in a cylinder whose outer diameter is uniform in the axial direction, the planetary ball 40 contacts the outer peripheral surface of the sun roller 30 only at the single contact point, and the sun roller 30 thus receives a load (normal force) from the planetary ball 40 only at the contact point. Accordingly, this not only results in a large friction loss between the sun roller 30 and the planetary ball 40 at the contact point but also result in possible damage to outer peripheral surfaces of the sun roller 30 and the planetary ball 40.

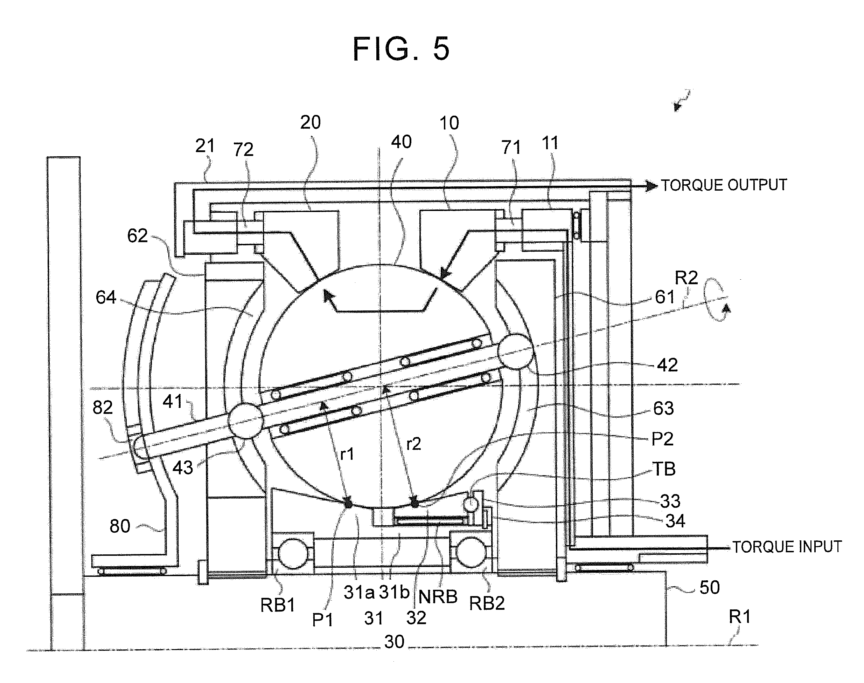

Accordingly, the first embodiment is configured such that the sun roller 30 and the planetary ball 40 contact each other at two points spread in the axial direction that are first and second contact point P1, P2 (FIG. 5). Here, a central section of the outer peripheral surface of the sun roller 30 in the axial direction is radially recessed inward compared to both end section sides along the circumferential direction so that the first and second contact points P1, P2 are formed in the recessed section. The recessed section may be formed in a V-shape or in an arc shape whose radius of curvature is larger than the radius of the planetary ball 40. However, during the tilt (γ ≠ 1), a difference occurs between a circumferential speed V1 (= r1 * ω) of the first contact point P1 and a circumferential speed V2 (= r2 * ω) of the second contact point P2. A term "r1" denotes the shortest distance between the first contact point P1 and the second rotational central axis R2, and a term "r2" denotes the shortest distance between the second contact point P2 and the second rotational central axis R2. Further, a symbol "ω" denotes the angular velocity of the planetary ball 40. The circumferential speed difference between the first and second contact points P1, P2 causes a spin loss between the sun roller 30 and the planetary ball 40 when the sun roller 30 is an integral structure. Thus, the sun roller 30 is configured in a two-part split structure including a first split structure having the first contact point P1 and a second split structure having the second contact point P2 so as to allow relative rotation with respect to each other around the first rotational central axis R1. Consequently, in the continuously variable transmission 1, the circumferential speed difference occurs between the first and second contact points P1, P2 during the tilt; however, a first rotating member (hereinafter referred to as "first sun roller") 31 as the first split structure and a second rotating member (hereinafter referred to as "second sun roller") 32 as the second split structure rotate at their individual speeds. Therefore, the continuously variable transmission 1 can reduce the spin loss between the sun roller 30 and the planetary ball 40 and thus restrict a decrease in power transmission efficiency. Further, the continuously variable transmission 1 allows an improvement in durability of the sun roller 30 and the planetary ball 40 because of the reduction in the spin loss. Hereinafter, a specific configuration will be described.

The sun roller 30 is split into the first sun roller 31 having one outer peripheral surface in the axial direction and the second sun roller 32 having the other outer peripheral surface across the deepest section of the recessed section. The one outer peripheral surface has the first contact point P1, and the other outer peripheral surface has the second contact point P2. In the sun roller 30, the outer peripheral surfaces of the first sun roller 31 and the second sun roller 32 are formed into shapes in which sections containing the first contact point P1 and the second contact point P2 are in a left-right symmetrical positional relationship and have the same shapes across the deepest section of the recessed section so that the shortest distances from the first rotational central axis R1 to the first contact point P1 and the second contact point P2 are set constant and the shortest distances from the plane containing all the centers of gravity (rotational centers) of the planetary balls 40 (hereinafter referred to as "split reference plane") to the first contact point P1 and the second contact point P2 are set constant.

The first sun roller 31 has a first tubular section 31a whose outer diameter decreases toward the split reference plane and a second tubular section 31b that extends in the axial direction from an end surface of the first tubular section 31a on the split reference plane side in the same outer diameter. The outer diameter of the second tubular section 31b is set smaller than the minimum outer diameter of the first tubular section 31a. The first sun roller 31 has the first contact point P1 on an outer peripheral surface of the first tubular section 31a. Accordingly, the end surface of the first tubular section 31a on the split reference plane side is provided in a position closer to the split reference plane than the first contact point P1. Meanwhile, the first sun roller 31 supports the concentric second sun roller 32 so as to allow relative rotation on an outer peripheral surface of the second tubular section 31b. Therefore, the second tubular section 31b extends so that its end surface is closer to the carrier 60 than the second sun roller 32 and the whole outer peripheral surface can support the second sun roller 32.

The first sun roller 31 is, in other words, the sun roller in an integral structure that has the recessed section, in which a stepped section or a groove section having a smaller diameter than the deepest section is provided in one section in the axial direction across the deepest section of the recessed section and the stepped section or the groove section is used as a housing section of the second sun roller 32.

The first sun roller 31 is mounted on the shaft 50 via first and second bearings so as to allow the concentric relative rotation in the circumferential direction with respect to the shaft 50. Here, radial bearings RB1, RB2 are used as the first and second bearings. The radial bearings RB1, RB2 are disposed at an interval in the axial direction between both ends in the axial direction of an inner peripheral surface of the first sun roller 31 and the outer peripheral surface of the shaft 50, and an outer race is fitted on the first sun roller 31, and an inner race is fitted on the shaft 50. The first sun roller 31 may be configured to be prevented from relative movement in the axial direction with respect to the shaft 50 as by bringing side surfaces of inner rings of the radial bearings RB1, RB2 into contact with the carrier 60.

The second sun roller 32 is formed in a tube whose outer diameter is reduced toward the split reference plane and arranged on the outer peripheral surface of the second tubular section 31b of the sun roller 31 with the central axes (first rotational central axis R1) matched. The second sun roller 32 has the second contact point P2 on the outer peripheral surface. Accordingly, an end surface of the second sun roller 32 on the split reference plane side is provided in a position closer to the split reference plane than the second contact point P2.

Further, when the split reference plane is set as a reference point, it is preferable to set a constant displacement per unit length from the split reference plane in the axial direction for the outer diameter of the second sun roller 32 and the outer diameter of the first tubular section 31a. It is because the positions and shapes of the first contact point P1 and the second contact point P2 thereby become left-right symmetrical across the split reference plane. For example, the displacement is set constant, the recessed section has a V-shape. In this case, it is preferable to form the first tubular section 31a and the second sun roller 32 into a truncated-cone-like tube. Further, in a case where the displacement is not constant such as where it gradually increases, the recessed section has an arc shape.

The second sun roller 32 is rotatably supported by the second tubular section 31b of the first sun roller 31 via third and fourth bearings. The third bearing is disposed between an inner peripheral surface of the second sun roller 32 and the outer peripheral surface of the second tubular section 31b. For example, a radial bearing, a needle roller bearing, or the like can be applied thereto. Here, a needle roller bearing NRB is used. This allows the second sun roller 32 to relatively rotate in the circumferential direction with respect to the first sun roller 31.

Here, a thrust load from the planetary ball 40 in the axial direction acts on the first and second contact points P1, P2. However, the needle roller bearing NRB cannot bear the thrust load. In the continuously variable transmission 1, if the thrust load cannot be absorbed, the first sun roller 31 and the second sun roller 32 relatively move from each other in the axial direction. This may result in a large energy loss between the sun roller 30 and the planetary ball 40 and cause the decrease in power transmission efficiency.

Accordingly, the second sun roller 32 is mounted on the first sun roller 31 via a thrust bearing TB as the fourth bearing. Here, an end section where the outer diameter of the second sun roller 32 is larger (hereinafter referred to as "large diameter end section") is used as one race of the thrust bearing TB. A disc member 33 that face the end section in the axial direction is used as the other race. An inner peripheral surface of the disc member 33 is fitted on the outer peripheral surface of the second tubular section 31b. In this example, a locking member 34 that supports an outer side surface of the disc member 33 is fixed to the second tubular section 31b, and the thrust bearing TB receives the thrust load from the planetary ball 40, thereby preventing offset of the disc member 33 from the second tubular section 31b in the axial direction and bending of the disc member 33. Accordingly, because the thrust bearing TB absorbs the thrust load, the continuously variable transmission 1 can reduce a loss of energy between the sun roller 30 and the planetary ball 40 and thus restrict the decrease in power transmission efficiency.

For example, in the continuously variable transmission 1, only the thrust bearing TB bears the thrust load from the planetary ball 40. In contrast, in a split structure of a conventional sun roller, each angular bearing bears the thrust load from the planetary ball. Here, a bearing loss is proportional to the product of the thrust load, the speed difference between the races, and the number of the bearings. Accordingly, it can be understood that the loss of energy is less because the speed difference between the races of the continuously variable transmission 1 is smaller than the conventional sun roller and the number of the bearings is less.

Further, in the continuously variable transmission 1, the first sun roller 31 and the second sun roller 32 rotate at the same number of rotations when the gear ratio γ = 1, the circumferential speed difference does not occur therebetween, and a rotational difference between the races of the thrust bearing TB thus does not occur. Therefore, because the loss of energy due to the rotational difference between the races of the thrust bearing TB does not occur when the gear ratio γ = 1, the decrease in power transmission efficiency due to the rotational difference does not occur, either. Further, because the needle roller bearing NRB is not actuated in the continuously variable transmission 1 in this case, the loss of energy does not occur in the needle roller bearing NRB, either, and the decrease in power transmission efficiency caused by an action of the needle roller bearing NRB does not occur, either. Moreover, the thrust bearing TB and the needle roller bearing NRB are not actuated in the continuously variable transmission 1 in this case, and durability of the thrust bearing TB and the needle roller bearing NRB is thus improved.

In contrast, in the continuously variable transmission 1, although the circumferential speed difference occurs between the first sun roller 31 and the second sun roller 32 during the tilt (when the gear ratio γ ≠ 1), the second sun roller 32 is rotatably supported by the first sun roller 31. Accordingly, the circumferential speed difference is small and the rotational difference between the races of the thrust bearing TB is also small compared to the conventional form where the split structures of the sun roller are each held by the transmission shaft via the bearings. Therefore, because the loss of energy due to the rotational difference between the races of the thrust bearing TB can be maintained low during the tilt (when the gear ratio γ ≠ 1), the decrease in power transmission efficiency due to the rotational difference can be restricted. Further, because the action of the needle roller bearing NRB becomes slow along with reduction in the circumferential speed difference in the continuously variable transmission 1 in this case, the loss of energy decreases in the needle roller bearing NRB, and the decrease in power transmission efficiency caused by the action of the needle roller bearing NRB can be restricted. Moreover, the actions of the thrust bearing TB and the needle roller bearing NRB is small in the continuously variable transmission 1 in this case, and durability of the thrust bearing TB and the needle roller bearing NRB is thus improved.

As described above, in the continuously variable transmission 1, the sun roller 30 has the two contact points that are the first and second contact points P1, P2 between itself and the planetary ball 40. Therefore, the friction loss therebetween can be made small while the decrease in power transmission efficiency can be restricted, and damage to the outer peripheral surfaces of the sun roller 30 and the planetary ball 40 can be reduced. Further, the continuously variable transmission 1 is configured such that the sun roller 30 is formed in the two-part split structure so that the split structures (the first sun roller 31 and the second sun roller 32) respectively have the first contact point P1 and the second contact point P2 and the first sun roller 31 and the second sun roller 32 can relatively rotate with respect to each other. Therefore, the spin loss between the sun roller 30 and the planetary ball 40 can be reduced, and restriction of the decrease of power transmission efficiency and durability can be improved. Still further, in the continuously variable transmission 1, the first sun roller 31 supports the second sun roller 32 so as to allow relative rotation via the needle roller bearing NRB and the thrust bearing TB, the first sun roller 31 is supported by the shaft 50 so as to allow relative rotation via the radial bearings RB1, RB2, and the thrust load input from the planetary ball 40 to the first sun roller 31 and the second sun roller 32 can be absorbed by the thrust bearing TB. Accordingly, the decrease in power transmission efficiency can be restricted. Moreover, in the continuously variable transmission 1, because the thrust bearing TB and the needle roller bearing NRB are interposed between the first sun roller 31 and the second sun roller 32 where the circumferential speed difference is zero or small, the loss of energy in the thrust bearing TB and the needle roller bearing NRB becomes small, thus enabling restriction of the decrease in power transmission efficiency and durability improvement. As described above, the continuously variable transmission 1 can restrict the decrease in power transmission efficiency and improve durability.

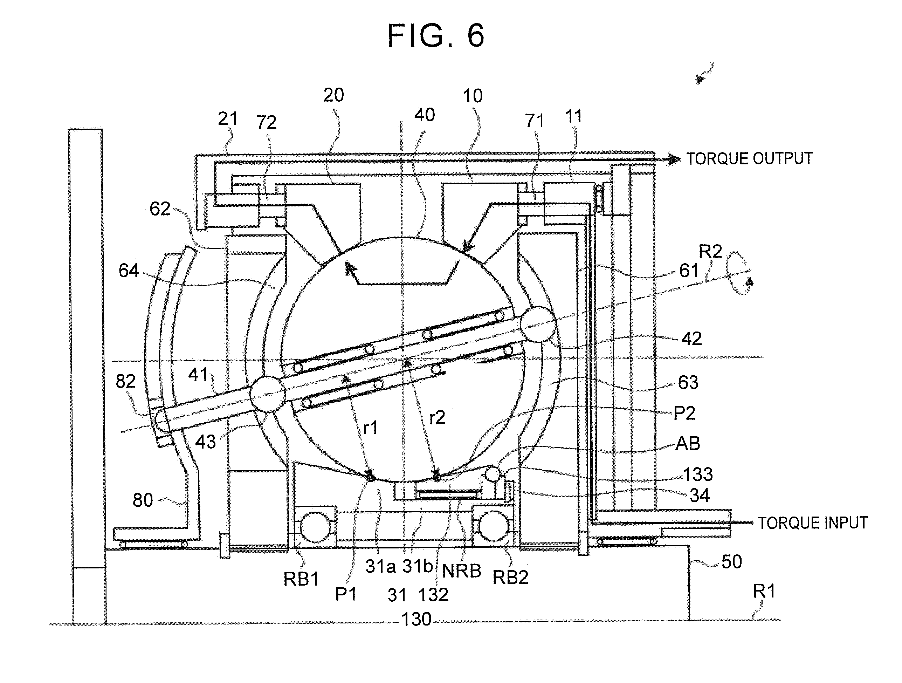

Incidentally, in the continuously variable transmission 1, the thrust bearing TB is interposed between the first sun roller 31 and the second sun roller 32 in order to absorb the thrust load from the planetary ball 40. However, the thrust bearing TB may be substituted with an angular bearing AB. For example, a continuously variable transmission 2 in FIG. 6 is the continuously variable transmission 1, in which the thrust bearing TB is substituted with the angular bearing AB and the second sun roller 32 and the disc section 33 that are involved in the substitution are substituted with a second sun roller 132 and a disc member 133.

The angular bearing AB uses a large diameter end section of the second sun roller 132 as an outer race and the disc member 133 as an inner race. In a sun roller 130 in the continuously variable transmission 2, the second sun roller 132 is formed in the same shape as the second sun roller 32 of the sun roller 30 except the section used as the outer race. Further, the disc member 133 is formed in the same shape as the disc member 33 except the section used as the inner race. The continuously variable transmission 2 can provide a similar effect to the continuously variable transmission 1.

### [Second Embodiment]

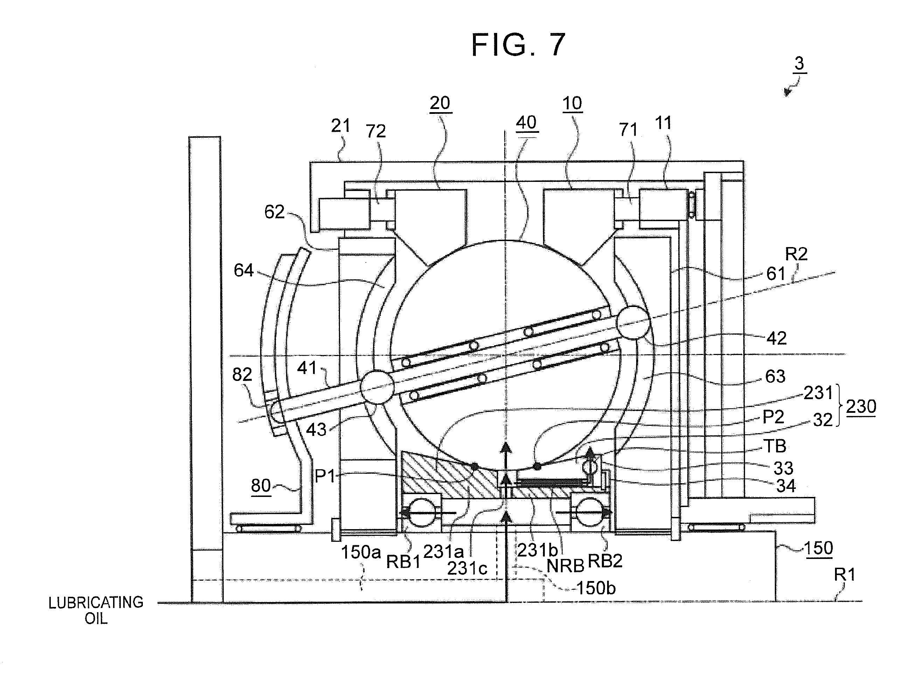

A second embodiment of the continuously variable transmission in accordance with the present invention will next be described hereinafter with reference to FIGs. 7 to 12.

In the continuously variable transmission 1 or the continuously variable transmission 2 of the above-described first embodiment, it is preferable to supply lubricating oil to the thrust bearing TB or the angular bearing AB in order to reduce the friction loss due to the rotational difference in the thrust bearing TB or the angular bearing AB during the tilt (when the gear ratio γ ≠ 1). In the second embodiment, a structure for supplying the lubricating oil will be described.

A reference numeral 3 in FIG. 7 denotes the continuously variable transmission of this embodiment. The continuously variable transmission 3 is the continuously variable transmission 1 of the first embodiment, in which the sun roller 30 is substituted with a sun roller 230 and the shaft 50 is substituted with a shaft 150.

The sun roller 230 includes a first sun roller 231 and a second sun roller 32.

The first sun roller 231 is the first sun roller 31 of the continuously variable transmission 1, in which at least one oil passage 231c connecting an inner peripheral surface side and an outer peripheral surface side together is provided. In other words, although the first sun roller 231 has a first tubular section 231a and a second tubular section 231b that are similar to the sun roller 31 of the continuously variable transmission 1, the first sun roller 231 is different from the first sun roller 31 in a point that the at least one oil passage 231c connecting the inner peripheral surface side and the outer peripheral surface side together is provided. The oil passage 231c is provided between the radial bearing RB1 and the radial bearing RB2 and between the first contact point P1 and the second contact point P2 in the axial direction of the first sun roller 231. Here, the oil passage 231c is formed in the second tubular section 231b to connect the inner peripheral surface side and the outer peripheral surface side of the second tubular section 231b together. Further, a discharge opening of the oil passage 231c is provided in a position that corresponds to the deepest section of the recessed section and in a gap between an end surface of the first tubular section 231a and the end surface of the second sun roller 32.

Meanwhile, the second sun roller 32 is the same as the second sun roller 32 of the continuously variable transmission 1. Accordingly, in the continuously variable transmission 3, the thrust bearing TB is interposed between the first sun roller 231 and the second sun roller 32.

The shaft 150 is the shaft 50 in the first embodiment, in which an axial oil passage 150a to which the lubricating oil pressure-fed by an oil pump or the like provided outside of or in the transmission and a discharge passage 150b for discharging the lubricating oil in the axial oil passage 150a to the outside are formed. The axial oil passage 150a guides the lubricating oil supplied from an end to the inside of the shaft 150 along the axial direction. Further, the discharge passage 150b allows communication between the axial oil passage 150a and the outside of the shaft 150 and includes a discharge opening on an outer peripheral surface of the shaft 150. The discharge opening of the discharge passage 150b is provided between the radial bearing RB1 and the radial bearing RB2.

The lubricating oil in the axial oil passage 150a is discharged from the discharge opening of the discharge passage 150b into an annular space formed by the radial bearings RB1, RB2, the outer peripheral surface of the shaft 150, and the inner peripheral surface of the first sun roller 231. Accordingly, the lubricating oil in the space is supplied to the radial bearings RB1, RB2 and lubricates and cools the radial bearings RB1, RB2. Further, because the space communicates with the oil passage 231c of the first sun roller 231, the lubricating oil in the space is also supplied to the oil passage 231c and discharged to the outer peripheral surface side of the second tubular section 231b. The discharged lubricating oil is then supplied to the needle roller bearing NRB and thereafter to the thrust bearing TB and can thus lubricate and cool the needle roller bearing NRB and the thrust bearing TB. Further, the lubricating oil discharged from the oil passage 231c can be delivered to the first contact point P1 and the second contact point P2 and lubricate and cool the sun roller 230 and the planetary ball 40. Still further, the lubricating oil is used as traction oil and can thus generate tangential force in supply to the first contact point P1 and the second contact point P2.

Here, in the continuously variable transmission 3, the second sun roller 32 may be substituted with the sun roller 132 of the continuously variable transmission 2, and the disc member 33 may be substituted with the disc member 133 of the continuously variable transmission 2. In such a configuration, because the lubricating oil is supplied to the angular bearing AB provided instead of the thrust bearing TB, the angular bearing AB can be lubricated and cooled.

As described above, according to the continuously variable transmission 3, the lubricating oil is supplied to the radial bearings RB1, RB2, the needle roller bearing NRB, the thrust bearing TB or the angular bearing AB, and the first and second contact points P1, P2. Consequently, the friction loss can be reduced in those, and power transmission efficiency is thus improved. Further, the continuously variable transmission 3 can restrict overheating through supply of the lubricating oil to those, thereby improving durability. Accordingly, the continuously variable transmission 3 can enhance the effects of restricting the decrease of power transmission efficiency and improving durability in the continuously variable transmissions 1, 2 of the first embodiment. Further, the continuously variable transmission 3 does not require provision of individual oil passages for the bearings and contact points and can thus restrict an increase in process cost of the oil passages and supply the lubricating oil to the bearings and the like.

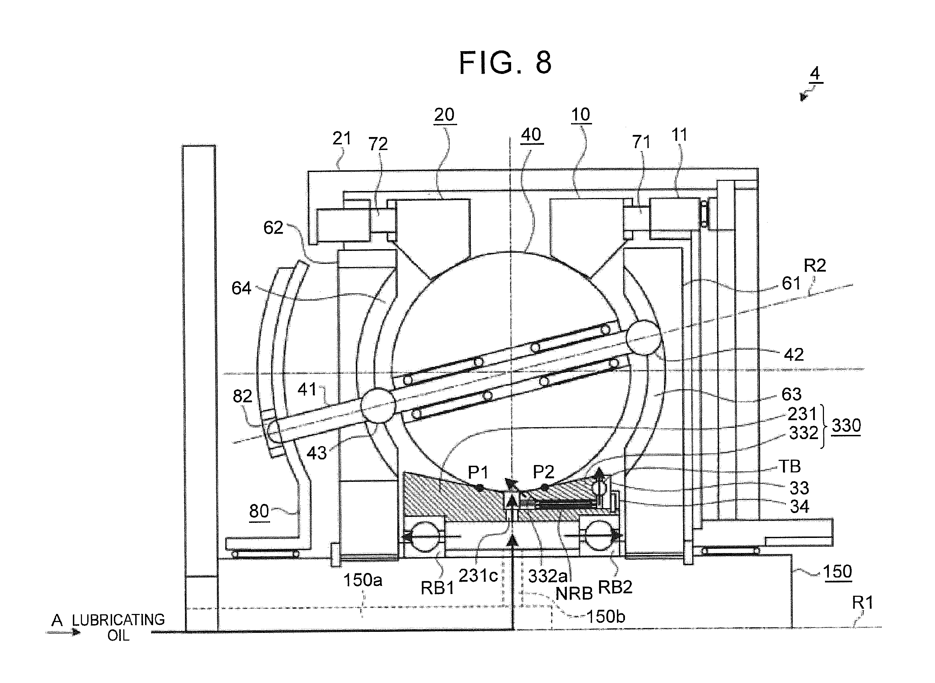

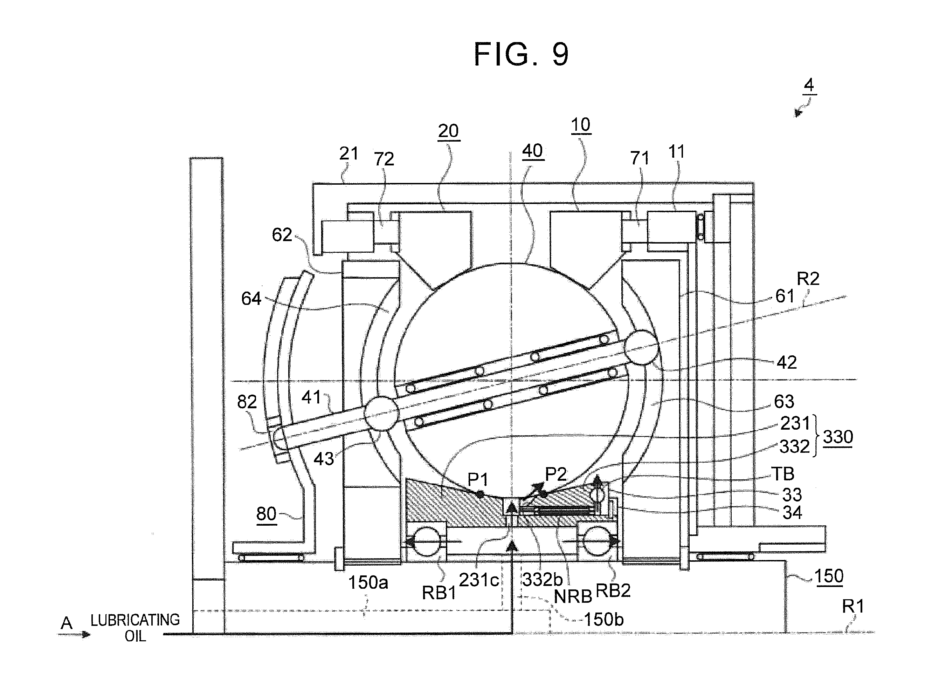

Incidentally, the continuously variable transmission 3 may have difficulty in increasing a supply amount of the lubricating oil to the first contact point P1 and the second contact point P2, for example, when supply pressure of the lubricating oil by the oil pump is low such as when the rotational speed of the sun roller 230 is low. In such a case, a portion of the lubricating oil discharged from the oil passage 231c may be guided to the first contact point P1 and the second contact point P2 by a guide section. A reference numeral 4 in FIGs. 8 and 9 denotes a continuously variable transmission provided with the guide section of the lubricating oil.

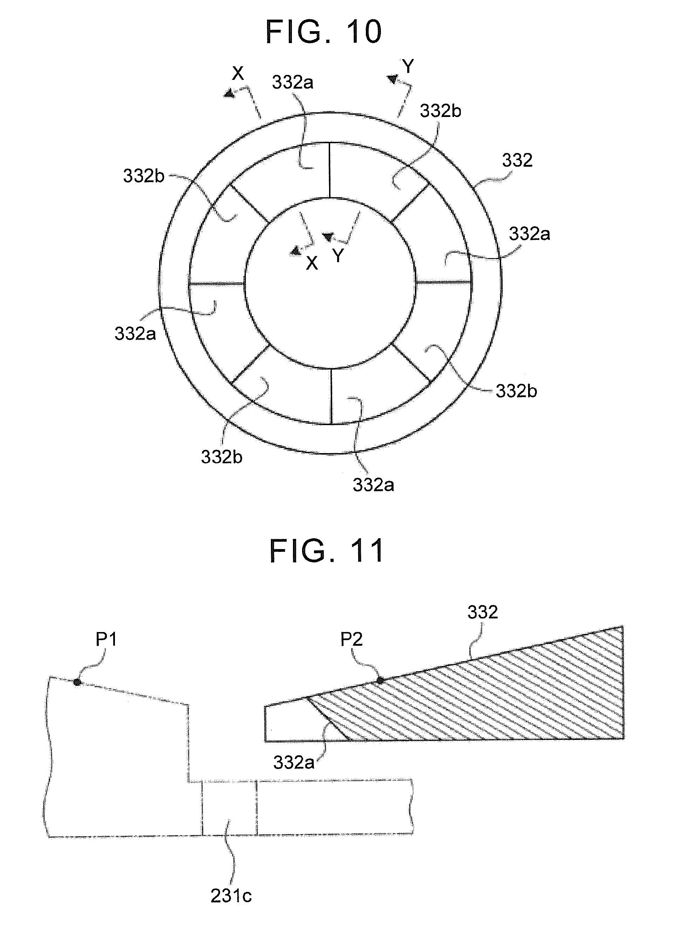

The continuously variable transmission 4 is the continuously variable transmission 3, in which the second sun roller 32 is substituted with a second sun roller 332. The second sun roller 332 is the second sun roller 32, in which at least one first guide section 332a and at least one second guide section 332b are formed in an end section that is positioned between the first contact point P1 and the second contact point P2 and where the outer diameter of the second sun roller 332 is smaller (hereinafter referred to as "small diameter end section"). Here, as shown in FIG. 10, the plurality of first guide section 332a and the second guide section 332b are alternately formed in the circumferential direction.

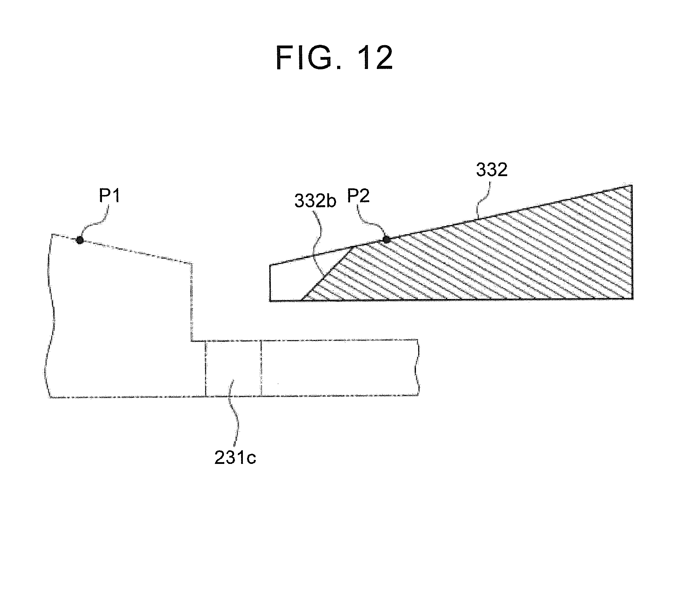

The first guide section 332a guides the lubricating oil to the first contact point P1 and, as shown in FIGs. 8 and 11, has an inclined surface toward the first contact point P1. The lubricating oil discharged from the oil passage 231c reaches the first guide section 332a by centrifugal force caused by rotation of the first sun roller 231, flows along the inclined surface, and is supplied to the first contact point P1. Meanwhile, the second guide section 332b guides the lubricating oil to the second contact point P2 and, as shown in FIGs. 9 and 12, has an inclined surface toward the second contact point P2. The lubricating oil discharged from the oil passage 231c is delivered to the second guide section 332b by centrifugal force caused by rotation of the first sun roller 231, flows along the inclined surface, and is supplied to the second contact point P2.

According to the continuously variable transmission 4, even in a circumstance where it is difficult to increase the supply amount of the lubricating oil to the first contact point P1 and the second contact point P2, the lubricating oil is guided to the first contact point P1 and the second contact point P2 by the first guide section 332a and the second guide section 332b. Particularly, in the continuously variable transmission 4, the plurality first guide section 332a and second guide section 332b that are alternately arranged can thoroughly supply a sufficient amount of the lubricating oil to the first contact point P1 and the second contact point P2. Accordingly, the continuously variable transmission 4 improves cooling and lubricating performance of the sun roller 330 and the planetary ball 40 and can further generate desired normal force at the first contact point P1 and the second contact point P2.

Here, in the continuously variable transmission 4, the second sun roller 332 may be substituted with the second sun roller 132 of the continuously variable transmission 2, the disc member 33 may be substituted with the disc member 133 of the continuously variable transmission 2, and the at least one first guide section 332a and the at least one second guide section 332b may be provided in the small diameter end section of the second sun roller 132. That is, in the continuously variable transmission 4, the thrust bearing TB can be substituted with the angular bearing AB.

Incidentally, in the above-described continuously variable transmissions 1, 2, 3, 4, the carrier 60 is exemplified as a fixed element; however, the carrier 60 may be used as a rotating element, and either one of the first rotating member 10 and the second rotating member 20 may be used as a fixed element. The continuously variable transmission 1, 2, 3, 4 in such a configuration can provide the same effect as the above examples.

Further, in the above-described continuously variable transmissions 1, 2, 3, 4 of the embodiments, the first rotating member 10 and the second rotating member 20 are respectively used as the input section and the output section of torque; however, the either one of the two split structures (the first sun roller and the second sun roller) of the sun rollers 30, 130, 230, 330 may substitute for the input section or the output section of torque, and the two split structures may substitute for the input section and the output section of torque. The continuously variable transmission 1, 2, 3, 4 in such a configuration can provide the same effect as the above examples.

### DESCRIPTION OF REFERENCE NUMERALS AND SYMBOLS

1, 2, 3, 4: continuously variable transmission
10: first rotating member (first rotating element)
20: second rotating member (second rotating element)
30, 130, 230, 330: sun roller (third rotating element)
31, 231: first sun roller
31a, 231a: first tubular section
31b, 231b: second tubular section
32, 132, 332: second sun roller
33: disc member
34: locking member
40: planetary ball (rolling member)
41: support shaft
50, 150: shaft (transmission shaft)
60: carrier (holding member)
80: iris plate
150a: axial oil passage
150b: discharge passage
231c: oil passage
332a: first guide section
332b: second guide section
AB: angular bearing
P1: first contact point
P2: second contact point
R1: first rotational central axis
R2: second rotational central axis
TB: thrust bearing

## Claims

1. A continuously variable transmission comprising:
a transmission shaft which serves as a rotational center;
first and second rotating elements that are arranged to face each other on the transmission shaft, have a common first rotational central axis, and are capable of relative rotation;
a plurality of rolling members that have a second rotational central axis in parallel with the first rotational central axis, radially arranged around the first rotational central axis, and are interposed between the first and second rotating elements;
support shafts that have the second rotational central axis and have both ends protruding from the rolling members;
a holding member which holds the rolling members so as to allow tilt via the respective protrusions of the support shafts;
a third rotating element which includes a first rotating member that includes a first tubular section having first contact points with the rolling members on an outer peripheral surface and a second tubular section having a smaller outer diameter than the first tubular section and is capable of concentric relative rotation with respect to the transmission shaft and a second rotating member that has second contact points with the rolling members on an outer peripheral surface and is capable of concentric relative rotation with respect to the first rotating member on an outer peripheral surface of the second tubular section;
bearings that are interposed between the first rotating member and the second rotating member and bear thrust loads in an axial direction that are transmitted from the rolling members via the first and second contact points to the first rotating member and the second rotating member; and
a transmission device which changes gear ratios by changing rotational ratios between the first rotating element and the second rotating element by tilt actions of the rolling members.

2. The continuously variable transmission according to claim 1, wherein the third rotating element is a sun roller in a two-part split structure having the first rotating element and the second rotating element.

3. The continuously variable transmission according to claim 1 or 2, further comprising:
first and second bearings that are arranged at intervals in the axial direction between the first rotating member and the transmission shaft; and third bearings that are arranged between the outer peripheral surface of the second tubular section and an inner peripheral surface of the second rotating member,
wherein an axial oil passage to which lubricating oil is supplied and discharge passages that allow communication between the axial oil passage and spaces between the first and the second bearings are provided in the transmission shaft, and the first rotating member is provided with oil passages that allow communication between the spaces and the first and second contact points sides.

4. The continuously variable transmission according to claim 3,
wherein a first guide section which guides the lubricating oil discharged from the oil passage of the first rotating member toward the first contact point and a second guide section that guides the discharged lubricating oil toward the second contact point are provided in an end section of the second rotating member which is positioned between the first contact point and the second contact point.
